**Europäisches Patentamt**

**European Patent Office**

**Office européen des brevets**

(19)

(11) Numéro de publication : **0 015 834**
**B1**

(12)

# FASCICULE DE BREVET EUROPÉEN

(45) Date de publication du fascicule du brevet :
13.10.82

(51) Int. Cl.³ : **B 29 D 17/00**

(21) Numéro de dépôt : **80400282.2**

(22) Date de dépôt : **29.02.80**

(54) **Procédé et appareil de réalisation de disques vidéo.**

(30) Priorité : 06.03.79 FR 7905733

(43) Date de publication de la demande :
**17.09.80 (Bulletin 80/19)**

(45) Mention de la délivrance du brevet :
**13.10.82 Bulletin 82/41**

(84) Etats contractants désignés :
**DE GB IT NL SE**

(56) Documents cités :
**FR A 692 926
FR A 2 037 928
FR A 2 090 169
FR A 2 166 095
FR A 2 384 404
US A 3 052 586**

(73) Titulaire : **THOMSON-BRANDT**
**173, Boulevard Haussmann**
**F-75360 Paris Cedex 08 (FR)**

(72) Inventeur : **Bricot, Claude**
**"THOMSON-CSF" - SCPI 173, Bld Haussmann**
**F-75360 Paris Cedex 08 (FR)**
Inventeur : **Robin, Gérard**
**"THOMSON-CSF" - SCPI 173, Bld Haussmann**
**F-75360 Paris Cedex 08 (FR)**

(74) Mandataire : **Lepercque, Jean et al**
**THOMSON-CSF SCPI 173, Bld Haussmann**
**F-75360 Paris Cedex 08 (FR)**

Imprimerie Jouve, 18, rue St-Denis, 75001 Paris, France

## Procédé et appareil de réalisation de disques vidéo

L'invention concerne un procédé et un appareil de réalisation de disques vidéo, plus particulièrement selon une technique de moulage d'un substrat souple sur une matrice porteuse d'informations sous la forme de microreliefs.

Les disques vidéo lisibles optiquement sont généralement tels que l'information est enregistrée selon une piste en spirale ou en forme de cercles concentriques, formée d'une succession d'éléments dont les dimensions sont de l'ordre du micron : microcuvettes ou saillies, selon le procédé que l'on peut appeler de façon plus générale microreliefs. Les microreliefs sont obtenus, par exemple, par ablation thermique.

Pour certaines applications, il peut être utile de disposer d'un nombre plus ou moins important de copies identiques, obtenues à partir d'un même disque original : soit une matrice spécialement gravée et qui ne servira qu'à la duplication, soit un disque susceptible d'être enregistré et lu par l'utilisateur. De nombreux procédés de copie sont déjà connus, notamment ceux faisant appel aux techniques de pressages telles que celles utilisées pour les disques audio, qui nécessitent l'emploi pour les copies, d'un matériau plastique thermo-déformable. Les procédés de pressage, bien adaptés à la production en série, nécessitent un appareillage lourd, encombrant et coûteux, qui n'est guère intéressant pour des petites séries et ne peut pas être employé par l'utilisateur lui-même.

Plus adaptés à la production de petites séries, sont les procédés de moulage consistant à mettre en contact une matrice et un substrat, avec au moins un agent moulant intermédiaire. L'appareillage est alors plus léger, de mise en œuvre simple et de faible prix de revient, pouvant être installé dans un local quelconque, tel un appareil de reprographie, par exemple sur les lieux mêmes de l'utilisation. D'autre part, le moulage n'engendre pas de contraintes mécaniques au niveau de l'information et assure une meilleure fidélité de reproduction que le pressage. L'un des problèmes rencontrés est celui des bulles d'air qui s'intercalent entre la matrice et le substrat. On peut supprimer ce problème en opérant sous vide, ainsi qu'il est décrit dans la demande de brevet français n° 77 22 565 déposée le 22 juillet 1977 et publiée sous le n° 2 397 931. Cependant, la nécessité de disposer d'une enceinte sous vide implique que l'appareillage demeure compliqué et de mise en œuvre délicate. Un autre procédé de moulage de disques souples est décrit dans la demande de brevet français n° 74 34 629, déposée le 15 octobre 1974 et publiée sous le n° 2 247 329. Selon l'un des procédés décrit dans cette demande de brevet, on applique progressivement au moyen d'un rouleau un substrat recouvert d'une résine durcissable sur une matrice dont la surface porteuse de l'information a été préalablement traitée. Le substrat, préalablement enroulé partiellement sur le rouleau, s'applique progressivement et régulièrement sur la matrice lorsque le rouleau roule sur la matrice, chassant ainsi devant lui d'éventuelles bulles d'air ou de gaz. Dans l'un des modes de réalisation prévus, la résine peut être appliquée sur la matrice et être formée par exemple de monomères susceptibles d'être polymérisés par exposition à la lumière ultraviolette.

L'invention propose un procédé de réalisation de disques faisant appel aux techniques de moulage et mettant en œuvre une résine durcissable rapidement, ce procédé assurant une meilleure sécurité que le procédé décrit ci-dessus quant à l'absence de bulles d'air et à l'uniformité de la couche de résine.

L'invention a pour objet un procédé de réalisation de disques vidéo ayant au moins une face obtenue par copie à partir d'une matrice comportant une zone gravée portant des informations sous la forme de microreliefs superficiels, selon lequel une résine fluide est intercalée entre la matrice et un film souple de substrat transparent en une couche épousant les microreliefs, la couche de résine étant ensuite durcie, le substrat sur lequel adhère la résine étant ensuite décollé de la matrice, principalement caractérisé en ce que le procédé comprend le dépôt d'un bourrelet de résine sur la matrice en dehors de la zone gravée et l'application du film au moyen d'un rouleau-presseur sur le bourrelet, le rouleau-presseur étant actionné dans une direction perpendiculaire au bourrelet de façon à rapprocher progressivement le film de la matrice en s'éloignant de la zone de dépôt du bourrelet de résine.

L'invention a encore pour objet un appareil de réalisation de disques vidéo mettant en œuvre ce procédé.

L'invention sera mieux comprise au moyen de la description ci-après et des figures annexées parmi lesquelles :

la figure 1 est une vue d'ensemble de l'appareil selon l'invention ;

la figure 2 est une vue de la matrice avant l'opération de moulage ;

la figure 3 est une vue partielle de l'appareil de moulage en cours de fonctionnement ;

la figure 4 est une vue du substrat sur lequel ont été copiés des disques ;

la figure 5 représente des moyens de découpage du disque annexé à l'appareil de la figure 1.

Le principe de toute opération du moulage pour disques souples consiste à appliquer sur un disque original porteur d'informations un substrat souple, en insérant entre l'original et la copie une couche d'une substance durcissable. Le disque original, appelé matrice, porte des pistes successives gravées, par exemple par ablation thermique pour enregistrer les informations sous forme de microreliefs. On désire obtenir un disque-copie dont la surface, constituée par une couche de la substance durcie reproduit le même relief, en négatif, donc, d'après l'exemple choisi,

des microreliefs. Pour éviter l'interposition d'une couche d'un agent de démoulage entre la matrice et la substance durcissable, ce qui risque d'être préjudiciable localement à la qualité du microrelief, l'invention prévoit d'utiliser une résine pouvant s'étaler facilement et qui, une fois durcie, n'adhère pas à la matrice, mais au contraire, adhère au substrat choisi. Dans le mode de réalisation choisi à titre d'exemple non limitatif pour illustrer la description ci-après, la surface de la matrice porteuse de l'information est en métal. Le substrat à partir duquel on réalise le disque-copie est une feuille mince de plastique, par exemple en chlorure de polyvinyle (PVC), ou bien, préférentiellement, en polyester spécialement traité pour augmenter son adhérence. Le polyester permet d'obtenir un meilleur état de surface que le PVC et est plus stable.

Outre ses qualités d'adhérence au substrat et non à la matrice la résine doit être aussi peu fragile que possible, c'est-à-dire surtout peu sensible à l'abrasion. Elle doit d'autre part ne pas engendrer de contraintes dans le substrat, ce qui aboutirait à des déformations du disque-copie. Pour obtenir les qualités requises, la résine choisie peut être une résine acrylique composée de monomères et que l'on peut polymériser rapidement par irradiation, sous un rayonnement ultraviolet. En raison de cette irradiation, le polyester est préféré au PVC, qui devient cassant lorsqu'on l'expose aux ultraviolets. Le rayonnement peut être appliqué à la résine à travers la feuille de polyester, qui l'absorbe peu. Une autre résine convenant à l'invention est composée d'élastomères silicones, que l'on peut durcir par chauffage, au moyen par exemple d'une lampe infrarouge.

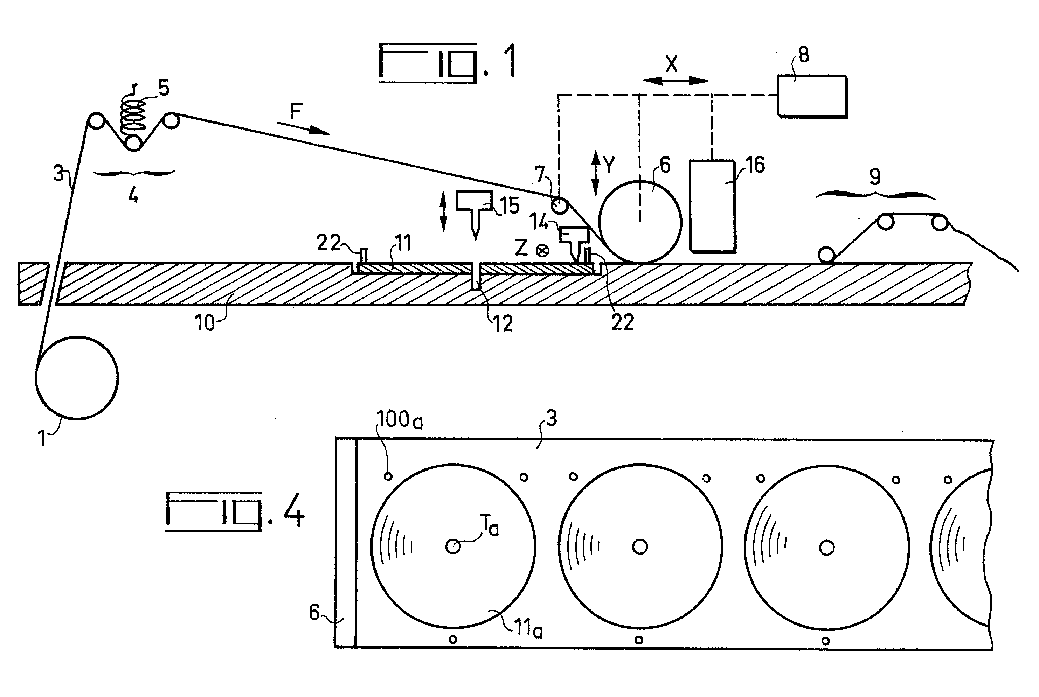

On peut voir sur la figure 1 les éléments principaux d'un appareil selon l'invention mettant en œuvre une résine photopolymérisable. L'appareil représenté permet de reproduire un grand nombre de fois sur un film plastique 3 formant substrat l'information enregistrée sur une matrice 11. Le film 3 a une largeur supérieure au diamètre de la partie de la matrice portant l'information. La matrice 11 est encastrée dans une embase 10 à la surface de laquelle elle affleure. Cette embase est dans un plan horizontal. Le film plastique 3 est préalablement enroulé sur une bobine débitrice 1. Il est ensuite déroulé progressivement et son trajet est guidé par les éléments suivants :
— un jeu de rouleaux fixes 4 ;
— un tendeur 5 assurant une bonne tension du film 3 ;
— un rouleau mobile 7 ;
— un rouleau presseur ;
— un deuxième jeu de rouleaux fixes 9.

L'appareil comprend en outre une lampe ultraviolette 16 disposée en aval du rouleau 6 par rapport au sens de défilement F du film 3, légèrement au-dessus de l'embase 10, son rayonnement étant dirigé vers cette embase.

Le rouleau presseur 6 est mobile dans la direction verticale selon la flèche Y de façon à occuper soit une position haute, soit une position basse pour laquelle il est en contact avec l'embase 10. Le rouleau mobile 7, le rouleau presseur 6 et la lampe ultraviolette 16 sont solidaires dans leurs mouvements, selon une direction horizontale X, commandés par un moteur 8. Le film 3 est débité selon une avance pas à pas dans le sens F à chaque opération de duplication au moyen de la bobine 1. Pendant le mouvement d'avance du film le rouleau presseur 6 est en position haute de façon à dégager le film ; il est ensuite abaissé de manière à presser le film contre l'embase 10. Le fonctionnement de l'appareil est le suivant :

1. Le film 3 avance de façon à présenter face à la matrice 11 une surface vierge.

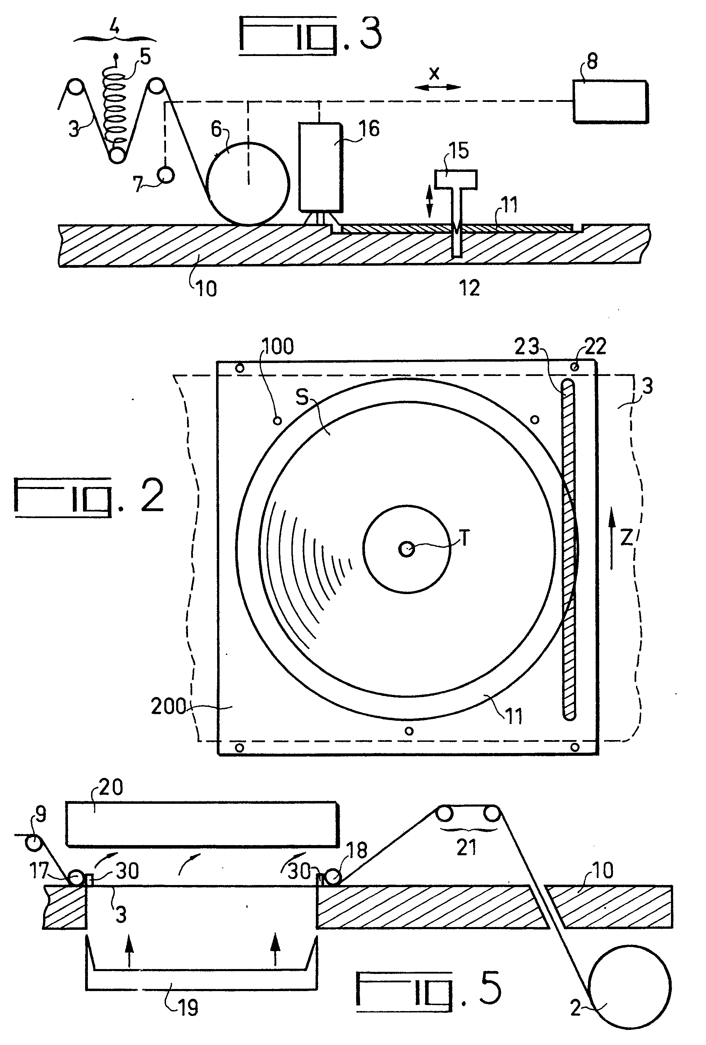

2. Un dispenseur de résine 14 dépose sur un bord de la matrice 11 un bourrelet de résine allongé de longueur au moins égale au diamètre de la surface enregistrée de la matrice 11. Pour cela le dispenseur 14 se déplace parallèlement au plan de l'embase 10 selon la direction Z perpendiculaire à X. La disposition du bourrelet 23 par rapport à la matrice 11 sur laquelle est enregistrée une information selon une surface S est représentée sur la figure 2 qui est une vue de dessus de la matrice. Le dispenseur 14 est ensuite maintenu hors du champ de la matrice.

3. Après mise en route de la lampe ultraviolette 16, le rouleau presseur 6 qui était initialement en aval de la matrice avance progressivement en direction de celle-ci simultanément avec le rouleau mobile 7 et la lampe ultraviolette 16 sous la commande du moteur 8. Lorsque le film arrive en contact du bourrelet de résine, le rouleau continue à avancer en chassant devant lui la résine qui s'étale progressivement entre la matrice et le film et est aussitôt insolée par le rayonnement ultraviolet jusqu'à ce que le rouleau 6 arrive de l'autre côté de la matrice. Le film est guidé sur la matrice grâce à un ensemble de tétons de positionnement 22, visibles sur les figures 1 et 2 délimitant exactement la largeur du film.

4. Peut intervenir alors le perçage du trou central du disque. La matrice 11 possède elle-même un trou central T. Elle est encastrée autour d'un pivot 12 qui est par exemple un cylindre évidé. Un poinçon 15 situé au-dessus de la matrice en face de l'évidement et mobile verticalement est alors actionné de façon à percer en Ta le film appliqué sur la matrice exactement à l'emplacement du trou central de la matrice. On est ainsi assuré que le trou est parfaitement positionné par rapport à l'information enregistrée sur la matrice et reproduite sur le substrat.

Cette phase de perçage du trou central est illustrée sur la figure 3 qui est une vue partielle de l'appareil de la figure 1. On peut voir sur cette figure les emplacements respectifs du poinçon et de la matrice, l'emplacement du rouleau presseur à ce stade de l'opération, c'est-à-dire en amont de la matrice par rapport au sens de déroulement du film plastique. La résine est intercalée en couche régulière entre la portion du film constituant le disque en cours de réalisation et la matrice.

5. Le rouleau presseur 6 est placé en position haute et actionné, en même temps que le rouleau mobile 7 et la lampe ultraviolette 16 par le moteur 8 de façon à revenir à leur position initiale. Le rôle du rouleau 7 est de décoller le substrat de la matrice. Lorsque la composition de la résine est bien choisie, celle-ci une fois polymérisée n'adhère plus sur la matrice mais adhère parfaitement sur le film. Ainsi la portion du film qui était en vis-à-vis de la matrice porte maintenant une couche de résine dans laquelle est gravée l'information portée par la matrice. Le rouleau 6 étant en position haute, il ne risque pas d'altérer l'état de l'empreinte.

Le rouleau presseur 6 étant abaissé, la première phase d'une nouvelle opération de moulage, c'est-à-dire l'avance du film peut débuter.

Sur la figure 4 est représenté l'état du substrat 3 à la sortie de l'appareil décrit ci-dessus. Sur la feuille de plastique sont disposées les copies successives 11a de la matrice régulièrement espacées en fonction de la longueur du film déroulé pour chaque opération. La figure 4 montre également l'emplacement du rouleau 6 par rapport au substrat 3 au début d'une opération de moulage d'une nouvelle copie.

L'appareil décrit ci-dessus permet, en y ajoutant quelques éléments supplémentaires, de réaliser un disque double-face en retournant le film de plastique 3, après la copie d'une série de disques sur une face à partir d'une première matrice. Pour obtenir le même centrage entre les deux faces, reproduites en général à partir de deux matrices différentes, il est nécessaire de prévoir des moyens d'indexage pour que toutes les matrices susceptibles d'être reproduites soient positionnées de la même façon sur l'embase 10. Un mode de réalisation de ces moyens est représenté sur la figure 2. La matrice 11 est placée sur un support 200 muni de tétons 100 délimitant exactement les dimensions d'une matrice. Au moins trois tétons sont nécessaires. Lors de la construction de l'appareil, on fait en sorte qu'ils soient correctement positionnés par rapport au pivot 12, de façon que le trou central T des différentes matrices utilisées et positionnées par les tétons soit toujours au même endroit, en coïncidence avec l'ensemble pivot 12-poinçon 15. Une autre condition à remplir est le bon positionnement du film plastique, lors de la copie de la deuxième face. On peut utiliser à cet effet les tétons 100. On donne à ces tétons une forme en pointe de façon à percer le film plastique lors de la réalisation de la première face. Pour la réalisation de la deuxième face, on s'assure que les perforations du film 3 coïncident avec les tétons. Les perforations 100a, sont visibles sur la figure 4. Par ailleurs, pour éviter une détérioration possible de la couche de résine de la première face par le rouleau presseur 6, on peut enduire celui-ci de caoutchouc, ou bien intercaler entre le rouleau et le film 3 une feuille protectrice, par exemple un papier alvéolé.

Sur la figure 5 est représenté un appareil pouvant être annexé à l'appareil de moulage de la figure 1, destiné à découper les copies disposées sur le film de plastique 3 et plus particulièrement adapté à la réalisation de disques à une face. Cet appareil peut être disposé à la suite de l'appareil précédent, il comporte donc la même embase 10 sur laquelle est plaquée la partie du substrat 3 que l'on désire découper entre deux rouleaux 17 et 18 succédant à l'ensemble de rouleau 9. La partie du film destinée à être découpée surplombe un évidement dans l'embase 10 et est placée en vis-à-vis d'une presse à découper 19, grâce à un ensemble de tétons 30. Cette presse entre en action régulièrement au fur et à mesure de l'avance pas à pas du film plastique. Les opérations de copie et de découpe peuvent être effectuées en synchronisme, la copie d'un disque s'effectuant pendant qu'un disque ayant été réalisé au cours d'une opération de copie précédente est découpé. Un extracteur à succion 20 peut être placé au-dessus de la presse à découper de façon à extraire le disque-copie dès qu'il est découpé. A la suite du rouleau 18 sont disposés un ensemble de rouleaux 21 et une bobine réceptrice 2 récupérant la portion du substrat ne portant pas d'information et qui subsiste après la découpe.

L'invention a été réalisée selon le mode de réalisation décrit, en utilisant une matrice métallique gravée, un film de polyester traité et une résine acrylique. Une lampe ultraviolette de puissance 80 W/cm², située à quelques cm du film et mobile, avec le rouleau, à la vitesse de 1 m/s, permet de polymériser cette résine. La lampe ultraviolette peut être remplacée par une lampe infrarouge si la résine utilisée est thermodurcissable. On peut alors obtenir un débit de duplication de 1 disque par minute, le découpage pouvant s'effectuer simultanément à cette vitesse. Le procédé décrit a permis d'obtenir un gain de 3 dB sur le rapport signal-bruit, par rapport au procédé antérieurement utilisé de thermo-pressage.

Bien entendu, il est possible de combiner différemment les opérations de moulage, de perçage du trou central et de découpage. Par exemple, le fait d'effectuer le perçage du trou central à l'endroit même où le disque a été moulé est avantageux, mais pas obligatoire. De même, il n'est pas nécessaire que le découpage s'effectue en synchronisme avec le moulage. Par ailleurs, l'agencement décrit des différents éléments de l'appareil de réalisation de disques, comprenant ou non un appareillage annexe de perçage et de découpage, n'est pas limitatif de l'invention.

**Revendications**

1. Procédé de réalisation de disques vidéo ayant au moins une face obtenue par copie à partir d'une matrice (11) comportant une zone gravée (S) portant des informations sous la forme de microreliefs superficiels, selon lequel une résine fluide est intercalée entre la matrice (11) et un film souple (3) de substrat transparent en une couche épousant les microreliefs, la couche de résine étant ensuite durcie, le substrat sur lequel adhère la résine étant ensuite décollé de la matrice, caractérisé en ce que le procédé comprend le dépôt d'un bourrelet de résine (23) sur la matrice (11) en dehors de la zone gravée et l'application du film au moyen d'un rouleau-presseur (6) sur le bourrelet (23), le rouleau-presseur (6) étant actionné dans une direction (X) perpendiculaire au bourrelet de façon à rapprocher progressivement le film de la matrice (11) en s'éloignant de la zone de dépôt du bourrelet de résine (23).

2. Procédé selon la revendication 1, caractérisé en ce que la résine est photopolymérisable et en ce que la couche de résine est insolée progressivement par un rayonnement ultraviolet (16) au fur et à mesure de son étalement.

3. Procédé selon la revendication 2, caractérisé en ce que la résine est constituée de monomères acryliques.

4. Procédé selon l'une des revendications 2 et 3, caractérisé en ce que, le substrat laissant passer une fraction de rayonnement ultraviolet, l'insolation de la couche est effectuée à travers le substrat.

5. Procédé selon la revendication 1, caractérisé en ce que la résine est constituée d'élastomères silicones, son durcissement étant obtenu par chauffage.

6. Procédé selon l'une quelconque des revendications 1 à 5, caractérisé en ce que, la matrice étant munie d'un trou central (T), le substrat une fois appliqué sur la matrice (11) est percé d'un trou coïncidant avec le trou central de la matrice.

7. Procédé selon l'une quelconque des revendications 1 à 6, caractérisé en ce que, après avoir été décollé de la matrice (11), le substrat est découpé à la périphérie de la partie moulée, de façon à former un disque.

8. Procédé selon l'une quelconque des revendications 1 à 7, caractérisé en ce que le film (3) de substrat est actionné selon une avance pas à pas, de façon à permettre la réalisation de disques successifs régulièrement disposés sur le film.

9. Procédé selon les revendications 7 et 8, caractérisé en ce que les opérations de moulage et de découpage sont effectuées en synchronisme.

10. Procédé selon l'une quelconque des revendications 1 à 8, caractérisé en ce que les deux faces sont appliquées successivement sur deux matrices de façon à obtenir des disques double-face.

11. Appareil de réalisation de disques vidéo pour la mise en œuvre du procédé selon l'une quelconque des revendications 1 à 10, caractérisé en ce qu'il comprend une embase horizontale (10) munie d'un emplacement où est encastrée la matrice (11), un rouleau-presseur (6) associé à des moyens de déplacement transversal (8) dans le plan horizontal, des moyens (14) permettant de déposer le bourrelet de résine (23) dans une direction perpendiculaire (Z) à la direction (X) de déplacement du rouleau-presseur (6) et un rouleau (7) permettant le décollement du substrat lors du retour du rouleau-presseur (6).

12. Appareil selon la revendication 11, caractérisé en ce qu'il comprend en outre une lampe ultraviolette (16), la résine utilisée étant photopolymérisable.

13. Appareil selon la revendication 11, caractérisé en ce qu'il comprend en outre une lampe infrarouge, la résine utilisée étant thermodurcissable.

14. Appareil selon l'une quelconque des revendications 11 à 13, caractérisé en ce qu'il comprend en outre des moyens (5) assurant une tension du film lors de son application sur le substrat.

15. Appareil selon l'une quelconque des revendications 11 à 14, caractérisé en ce que les moyens (8) de déplacement transversal du rouleau-presseur (6) commandent en outre le rouleau (7) permettant le décollement.

16. Appareil selon l'une quelconque des revendications 11 à 15, caractérisé en ce que le rouleau-presseur (6) est en outre mobile verticalement (Y) de façon à dégager le film lors de son avance (F).

17. Appareil selon l'une quelconque des revendications 11 à 16, caractérisé en ce qu'il comprend en outre des moyens de poinçonnage (15) pour percer un trou (T) au centre du disque réalisé.

18. Appareil selon la revendication 17, caractérisé en ce qu'il comprend en outre des moyens de découpage (19) du substrat à la périphérie du disque.

19. Appareil selon la revendication 18, caractérisé en ce qu'il comprend en outre des moyens d'extraction (20) du disque une fois découpé et des moyens d'enroulement (2) de la partie restante du substrat.

**Claims**

1. A method for producing video discs having at least one face obtained by copying from a matrix (11) comprising an engraved zone (S) carrying information in the shape of surface micro-reliefs, in which a fluid resin is interposed as a layer contacting the micro-reliefs between the matrix (11) and a supple transparent substrate film (3), the resin layer being then hardened, the substrate on which the resin adheres being then pulled off from the matrix, characterized in that the method comprises depositing a resin bead (23) on the matrix (11) outside the engraved zone and application of the film onto the bead (23) using a pressure roller (6), the pressure roller (6) being activated in a direction (X) perpendicular to the bead in a manner to make the film progressively approach the matrix (11) with increasing distance from the resin bead (23) deposition zone.

2. Method in accordance with claim 1, characterized in that the resin is photo-polymerizable and in that the resin layer is progressively irradiated by an ultraviolet radiation (16) while it is progressively spread out.

3. Method in accordance with claim 2, characterized in that the resin is formed of acrylic monomers.

4. Method in accordance with any of claims 2 and 3, characterized in that, the substrate being transparent to a fraction of the ultra-violet radiation, the irradiation of the layer is performed through the substrate.

5. Method in accordance with claim 1, characterized in that the resin is formed of silicone elastomers, its hardening being obtained by heating.

6. Method in accordance with any of claims 1 to 5, characterized in that, the matrix being provided with a central hole (T), the substrate applied against the matrix (11) is perforated with a hole coincident with the central hole of the matrix.

7. Method in accordance with any of claims 1 to 6, characterized in that, after the matrix (11) has been pulled off, the substrate is cut off at the periphery of the molded part in a manner to form a disc.

8. Method in accordance with any of claims 1 to 7, characterized in that the substrate film (3) is activated in a step-wise forward fashion to allow the production of successive discs regularly arranged on the film.

9. Method in accordance with claims 7 and 8, characterized in that the molding and cutting operations are performed synchronously.

10. Method in accordance with any one of claims 1 to 8, characterized in that the two faces are progressively applied against two matrices in a manner to obtain double-sided discs.

11. An apparatus for the production of video discs and for performing the method of any of claims 1 to 10, characterized in that it comprises a horizontal base (10) provided with a location at which the matrix (11) is received, a pressure roller (6) associated with means (8) for transverse movement in a horizontal plane, means (14) allowing the deposition of a resin bead (23) in a direction (Z) perpendicular to the direction (X) of the pressure roller (6) movement, and a roller (7) allowing to lift the substrate off during the return of the pressure roller (6).

12. Apparatus in accordance with claim 11, characterized in that it further comprises an ultra-violet lamp (16), the resin used being photopolymerizable.

13. Apparatus in accordance with claim 11, characterized in that it further comprises an infrared lamp, the resin used being thermo-hardenable.

14. Apparatus in accordance with any of claims 11 to 13, characterized in that it further comprises means (5) allowing to tension the film during its application against the substrate.

15. Apparatus in accordance with any of claims 11 to 14, characterized in that the means (8) for transverse movement of the pressure roller (6) further control the roller (7) allowing the lifting.

16. Apparatus in accordance with any of claims 11 to 15, characterized in that the pressure roller (6) is further vertically (Y) movable in order to withdraw the film during its advance (F).

17. Apparatus in accordance with any of claims 11 to 16, characterized in that it further comprises means (15) for piercing a hole (T) in the center of the formed disc.

18. Apparatus in accordance with claim 17, characterized in that it further comprises means (19) for cutting off the substrate at the periphery of the disc.

19. Apparatus in accordance with claim 18, characterized in that it further comprises means (20) for extracting the disc when it is cut off and means (2) for winding up the remaining part of the substrate.

**Ansprüche**

1. Verfahren zur Herstellung von Videoplatten, die wenigstens eine Fläche aufweisen, die durch Kopieren ausgehend von einer Matrize (11) erhalten werden, die eine gravierte Zone (S) umfaßt, welche Informationen in Form von Oberflächen-Mikroreliefs trägt, wobei ein fluides Harz zwischen der Matrize (11) und einem geschmeidigen, lichtdurchlässigen Substratfilm (3) in Form einer an den Mikroreliefs anliegenden Lage zwischengefügt wird und wobei die Harzlage anschließend gehärtet wird, woraufhin das Substrat, auf dem das Harz haftet, von der Matrize abgelöst wird, dadurch gekennzeichnet, daß das Verfahren die Ablagerung eines Wulstes (23) aus Harz auf der Matrize (11) außerhalb der gravierten Zone und das Andrücken des Films mittels einer Andrückrolle (6) auf den Wulst (23) umfaßt, wobei die Andrückrolle (6) in einer Richtung (X) senkrecht zu dem Wulst derart betätigt wird, daß der Film progressiv an die Matrize (11) angenähert wird, während die Entfernung von der Zone der Ablagerung des Harzwulstes (23) zunimmt.

2. Verfahren nach Anspruch 1, dadurch gekennzeichnet, daß das Harz photopolymerisierbar ist und daß die Harzlage durch eine Ultraviolettstrahlung (16) progressiv im Maße ihrer Ausbreitung belichtet wird.

3. Verfahren nach Anspruch 2, dadurch gekennzeichnet, daß das Harz aus Acrylmonomeren gebildet ist.

4. Verfahren nach Anspruch 2 oder 3, dadurch gekennzeichnet, daß bei einem Substrat, das einen Bruchteil der Ultraviolettstrahlung durchläßt, die Belichtung der Lage durch das Substrat hindurch erfolgt.

5. Verfahren nach Anspruch 1, dadurch gekennzeichnet, daß das Harz aus Silikonelastomeren gebildet ist und seine Härtung durch Erwärmen erfolgt.

6. Verfahren nach einem der Ansprüche 1 bis 5, dadurch gekennzeichnet, daß bei einer mit einem mittigen Loch (T) versehenen Matrize das auf diese Matrize (11) aufgebrachte Substrat mit einem Loch durchbohrt wird, das mit dem mittigen Loch der Matrize zusammenfällt.

7. Verfahren nach einem der Ansprüche 1 bis 6, dadurch gekennzeichnet, daß nach dem Ablösen der Matrize (11) das Substrat am Umfang des geformten Teils so abgeschnitten wird, daß eine Platte gebildet wird.

8. Verfahren nach einem der Ansprüche 1 bis 7, dadurch gekennzeichnet, daß der Substratfilm (3) schrittweise fortschreitend so bewegt wird, daß die Herstellung von aufeinanderfolgenden Platten ermöglicht wird, die auf dem Film regelmäßig angeordnet sind.

9. Verfahren nach den Ansprüchen 7 und 8, dadurch gekennzeichnet, daß die Form- und Schneidvorgänge synchron ablaufen.

10. Verfahren nach einem der Ansprüche 1 bis 8, dadurch gekennzeichnet, daß die beiden Seiten nacheinander auf zwei Matrizen aufgebracht werden, um zweiseitige Platten zu erhalten.

11. Vorrichtung zur Herstellung von Videoplatten zur Durchführung des Verfahrens nach einem der Ansprüche 1 bis 10, dadurch gekennzeichnet, daß sie einen waagerechten Sockel (10) umfaßt, der eine Stelle aufweist, wo die Matrize (11) eingesetzt ist, eine Druckrolle (6) umfaßt, die Mitteln (8) zur transversalen Verlagerung in der waagerechten Ebene zugeordnet ist, Mittel (14) umfaßt, die es gestatten, den Harzwulst (23) in einer Richtung (Z) senkrecht zur Richtung (X) der Verlagerung der Druckrolle (6) aufzubringen, und eine Rolle (7) umfaßt, die die Ablösung des Substrates während der Rückbewegung der Druckrolle (6) gestattet.

12. Vorrichtung nach Anspruch 11, dadurch gekennzeichnet, daß sie ferner eine Ultraviolettlampe (16) umfaßt, wobei das verwendete Harz photopolymerisierbar ist.

13. Vorrichtung nach Anspruch 11, dadurch gekennzeichnet, daß sie ferner eine Infrarotlampe umfaßt, wobei das verwendete Harz wärmeaushärtbar ist.

14. Vorrichtung nach einem der Ansprüche 11 bis 13, dadurch gekennzeichnet, daß sie ferner Mittel (5) umfaßt, die eine Spannung des Films während des Anliegens desselben gegen das Substrat gewährleisten.

15. Vorrichtung nach einem der Ansprüche 11 bis 14, dadurch gekennzeichnet, daß die Mittel (8) zur transversalen Verlagerung der Druckrolle (6) ferner die die Ablösung gestattende Rolle (7) steuern.

16. Vorrichtung nach einem der Ansprüche 11 bis 15, dadurch gekennzeichnet, daß die Druckrolle (6) ferner senkrecht (Y) bewegbar ist, so daß der Film bei seinem Vorschub (F) freikommt.

17. Vorrichtung nach einem der Ansprüche 11 bis 16, dadurch gekennzeichnet, daß sie ferner Stanzmittel (15) zum Ausstanzen eines Loches (T) in der Mitte der hergestellten Platte umfaßt.

18. Vorrichtung nach Anspruch 17, dadurch gekennzeichnet, daß sie ferner Mittel (15) zum Abschneiden des Substrats am Umfang der Platte umfaßt.

19. Vorrichtung nach Anspruch 18, dadurch gekennzeichnet, daß sie ferner Mittel (20) zum Herausnehmen der abgeschnittenen Platte und Mittel (2) zum Aufrollen des verbleibenden Teils des Substrates umfaßt.

# FIG.1

# FIG.4

0 0 15 834

0 015 834

Fig. 3

Fig. 2

Fig. 5